(19) Europäisches Patentamt

European Patent Office

Office européen des brevets

(11) **EP 0 981 066 A1**

(12) **EUROPÄISCHE PATENTANMELDUNG**

(43) Veröffentlichungstag:
23.02.2000 Patentblatt 2000/08

(51) Int. Cl.$^7$: **G02F 1/1345**, G02F 1/1343, G03B 27/72

(21) Anmeldenummer: 98115693.8

(22) Anmeldetag: 20.08.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **GRETAG IMAGING AG**
**CH-8105 Regensdorf (CH)**

(72) Erfinder:
• **Kraft, Walter**
**8049 Zürich (CH)**
• **Jacocagni, Fulvio**
**5415 Nussbaumen (CH)**

(74) Vertreter:
**Schwabe - Sandmair - Marx**
**Stuntzstrasse 16**
**81677 München (DE)**

(54) **Lichtdichtesteuerung mittels LCD-Einrichtung**

(57) Die Erfindung betrifft eine LCD-Einrichtung, insbesondere zur Belichtungssteuerung einer Belichtungsvorrichtung, etwa eines Fotoprinters, zum Belichten von fotoempfindlichem Material, mit einer ersten durchsichtigen Platte (102) und einer zweiten durchsichtigen Platte (104), die planparallel beabstandet zueinander angeordnet sind, wobei ein Flüssigkeitkristallfluid in einem Freiraum zwischen den Platten (102,104) eingeschlossen wird, wobei die LCD-Einrichtung mehrere Bildelemente aufweist, denen Elektroden zugeordnet sind, die auf den Platten angeordnet sind, wobei Zuleitungen zu den Elektroden diesen Steuersignale zuführen, wobei erfindungsgemäß die erste Platte auf einer Seite eine einem Bildelement zugeordnete Elektrode (74) aufweist, während die einer Elektrode zugeordneten Zuleitungen auf der anderen Seite der erste Platte (102) vorgesehen sind und die jeweiligen Zuleitungen über leitende Bereiche (Öffnungen,50) in der ersten Platte an die Elektroden (74) angeschlossen sind.

FIG. 4

EP 0 981 066 A1

## Beschreibung

Die Erfindung betrifft das Gebiet des Fotofinishing und hier insbesondere das Gebiet der Lichtdichtesteuerung mittels einer LCD-Einrichtung, wobei ein fotografisches Negativ oder dergleichen abgetastet wird, um dessen Lichtdichteprofil zu bestimmen, um aufgrund dieser Bestimmung mittels einer LCD-Einrichtung eine Maskierung des Negativs vorzunehmen. Hierdurch können zu dunkle Bereiche aufgehellt werden, während helle Bereiche bzw. Bereiche mit günstiger Dichteverteilung erhalten bleiben, indem eine LCD-Einrichtung eine entsprechende Maskierung liefert, um einen fotografischen Abzug mit optimierten Belichtungsdaten zu erstellen. Hierbei betrifft die vorliegende Erfindung im besonderen eine LCD-Einrichtung, die für die genannten Zwecke konstruiert ist sowie ein Verfahren zu deren Herstellung.

Im Stand der Technik sind verschiedene Arten von Vorrichtungen und Verfahren zur Änderung der Lichtdichte beim Belichten von fotografischen Abzügen bekannt geworden. So zeigt die US 3,926,520 ein System zur Steuerung des Kontrastes bei der Herstellung fotografischer Abzüge. Ein Negativ wird abgetastet und aufgrund einer Auswertung der durch die Abtastung erhaltenen Daten wird eine Matrix aus transparentem, ferroelektrischem Keramikmaterial so manipuliert, daß eine Korrektur der Belichtung erfolgen kann, um die optische Qualität der Abzüge aufzuwerten.

Aus der DE 28 20 965 C2 ist ebenfalls eine Vorrichtung bekannt, die eine LCD-Matrix einsetzt, um eine Korrektur vornehmen zu können, so daß eine Lichtdichtesteuerung der Art vorgenommen werden kann, daß zu dunkle bzw. zu helle Bereiche eines Negativs auf dem Abzug ausgeglichen werden können.

Die DE 40 22 055 C2 offenbart gleichermaßen eine Vorrichtung zur Farb- und Helligkeitsregelung, bei der eine LCD-Matrix eingesetzt wird, um je nach den Erfordernissen eines Negativs die drei Grundfarben rot, blau und grün gleichmäßig zu modulieren.

Die EP 0 315 589 B1 setzt ebenfalls eine LCD-Matrix ein, um die Lichtdichte zu steuern.

Ähnliche Verwendungen einer LCD-Matrix sind auch der DE 196 34 148 C1, der DE 196 18 476 A1, der DE 41 03 905 A1 und weiteren Dokumenten aus dem Stand der Technik zu entnehmen.

Die bekannten Vorrichtungen bzw. Verfahren setzen allesamt Vorrichtungen ein, die eine Lichtausbeute haben, die vergleichsweise minimal ist. Hier können Lichtausbeuten von maximal etwa 20% der Lichtintensität bewerkstelligt werden, die von einer Lichtquelle zur Verfügung gestellt werden kann. Hier ist es folglich nötig, der LCD-Matrix entweder enorme Lichtmengen zur Verfügung zu stellen, indem die vorgesehenen Lichtquellen ganz erheblich vergrößert bzw. verstärkt werden, oder aber die Belichtungsdauer ganz enorm zu verlängern. Die erste Verfahrensweise sorgt dafür, daß in einer entsprechenden Belichtungsvorrichtung große Mengen an Wärme anfallen und abzuführen sind, während die andere Art der Vorgehensweise dazu führt, daß die Belichtungsdauer pro Abzug mindestens verfünffacht wird.

Beides ist wenig vorteilhaft, so daß sich die vorliegende Erfindung die Aufgabe stellt, eine LCD-Einrichtung für Belichtungsvorrichtungen auf dem Gebiet des Fotofinishing zur Verfügung zu stellen, die wesentlich mehr Licht durchlassen, wobei gleichzeitig keine weiteren Beeinträchtigungen im Strahlengang einer Belichtungsvorrichtung auftreten.

Die gemäß der vorliegenden Erfindung zu erzielenden Vorteile beruhen auf einer LCD-Einrichtung mit den im Patentanspruch 1 aufgeführten Merkmalen.

Gleichzeitig soll gemäß der vorliegenden Erfindung ein Verfahren zur Herstellung einer LCD-Einrichtung gemäß der Erfindung vorgeschlagen werden.

Ein entsprechendes Verfahren wird durch eine Vorrichtung mit den im Patentanspruch 21 aufgeführten Schritten gelöst.

Gemäß der Erfindung weist eine LCD-Einrichtung zum Belichten von fotoempfindlichem Material eine erste durchsichtige Platte und eine zweite durchsichtige Platte auf, die planparallel beabstandet zueinander angeordnet sind. Zwischen die Platten ist ein Flüssigkeitkristallfluid so eingebracht, daß dieses aus dem Zwischenraum zwischen den Platten nicht entweichen kann. Wenigstens eine der Platten weist Elektroden auf, die über Zuleitungen mit Steuersignalen versorgt werden können. Bei einer derartigen LCD-Einrichtung weist die erste Platte auf einer Seite eine einem Bildelement zugeordnete Elektrode auf, wobei auf der der einen Seite gegenüberliegenden Seite der ersten Platte die Signalzuleitung zu der Elektrode vorgesehen ist und wobei die Elektrode über einen leitenden Bereich der ersten Platte mit der ihr zugeordneten Zuleitung verbunden ist.

Gemäß der Erfindung ist es damit möglich, die aktive Oberfläche der einzelnen Bildelemente extrem groß auszubilden, da kein Platz für Leitungen zwischen den Elektroden der Bildelemente und Zuleitungen der LCD-Einrichtung erübrigt werden muß. Auf diese Weise muß zwischen den Elektroden der Bildelemente lediglich ein Zwischenraum gelassen werden, um ein Übersprechen bzw. Kurzschlüsse zwischen den Elektroden bzw. zwischen Bildelementen zu vermeiden. Ansonsten, falls die Zuleitungen, wie im Stand der Technik üblich, auf der gleichen Seite wie die Elektroden der Bildelemente anzuordnen wären, müßte zum einen ausreichend Platz auch für die diversen Zuleitungen auf derselben Seite einer durchsichtigen Platte vorgesehen werden, und zum anderen müßten zwischen den diversen Zuleitungen und den Elektroden jeweilige ausreichende Abstände vorgesehen werden. Auf diese Weise würde die aktive Matrixfläche der LCD-Einrichtung derart grob werden, daß bei einer Abbildung auf Fotopapier die Struktur der LCD-Einrichtung zu sehen wäre. Außerdem bewirkt eine solche Verringerung der aktiven Fläche eine entsprechende Reduktion der erzielbaren Lichtintensitätsmodulation. Dies wird gemäß der Erfindung ausgeschlossen.

Auf der zweiten durchsichtigen Platte werden, wie es prinzipiell bekannt ist, Gegenelektroden getrennt von den Elektroden vorgesehen. Zwischen den Elektrodenebenen ist das Volumen mit dem Flüssigkeitkristallfluid für die Erzeugung eines elektrischen Feldes zur Bewerkstelligung einer Korrelation bzw. einer Perkulation unter den Kristallbestandteilen des Flüssigkeitkristallfluids vorgesehen. Gute Erfahrungen konnten gesammelt werden, wenn für die leitenden Bereiche Öffnungen in der ersten Platte ausgebildet wurden, deren Ränder bzw. Wandungen mit einem leitenden Material wenigstens teilweise belegt bzw. beschichtet wurden. Dabei können die Öffnungen in der ersten Platte beispielsweise mittels einer Fotomaske und Naß- bzw. Trockenätztechniken erzeugt werden. So kann etwa eine Fotolackmaske zur Ausbildung von Öffnungen auf der ersten Platte aufgebracht werden, die gegenüber Flußsäure unempfindlich ist. Eine Ätzung mit Flußsäure führt dann zur Ausbildung von Öffnungen, deren Ränder bzw. Wandungen dann mit einem leitenden Material durch herkömmliche Technologien beschichtet werden können.

Besondere Vorteile ergeben sich, wenn die Elektroden bzw. Gegenelektroden aus einem wenigstens für das sichtbare Licht wenigstens im wesentlichen durchlässigen Material ausgebildet sind. Zwar ist es auch möglich, die Elektroden und Gegenelektroden aus Leiterrahmen auszubilden, die die Bildelementbereiche umgeben oder auch gitterartig überziehen, jedoch würden derartige Elektroden dazu führen, daß Streueffekte auftreten bzw. die Muster der LCD-Einrichtung auf einem Abzug zu erkennen sind. Eine solche Lösung wäre auch mit Lichtverlust und reduziertem Modulationsgrad verbunden.

Entsprechend sind vorteilhafterweise wenigstens einige der Zuleitungen bzw. Zuleitungsebenen, die den Elektroden bzw. Gegenelektroden zugeordnet sind, mit einem wenigstens für das sichtbare Licht wenigstens im wesentlichen durchlässigen Material hergestellt. Gleiches gilt für die Beschichtung, die innerhalb der Öffnungen in der ersten Platte die leitenden Bereiche bzw. Durchführungen ausbilden.

Als durchlässiges Material, das auch leitend gemacht werden kann, hat sich ITO (= Indium-Tin-Oxide) erwiesen. Dieses Material kann durch herkömmliche Auftragstechniken gleichmäßig dünn auf einem Untergrund aufgebracht werden, strukturiert werden und als Leiter eingesetzt werden, der gleichzeitig im wesentlichen für sichtbares Licht durchlässig ist.

Für die durchsichtigen Platten der erfindungsgemäßen LCD-Einrichtung hat es sich als besonders vorteilhaft erwiesen, wenn diese mit einem licht- bzw. strahlungsempfindlichen Zusatz versehen sind, bevorzugt einem Silber enthaltenden Zusatz, so daß durch eine entsprechende Behandlung die leitenden Bereiche bzw. die Öffnungen herstellbar sind. Dabei werden entsprechende durchsichtige Platten bzw. Gläser mit einer Maskierung versehen, die dem Öffnungsraster zur Ausbildung der leitenden Bereiche entspricht. Durch die Maskenstruktur hindurch erfolgt eine Belichtung bzw. Bestrahlung, so daß die den Silber enthaltenden Zusatz aufweisenden Bereiche, die über die Öffnungen in der Maskenstruktur bestrahlbar sind, ihren Zustand ändern, um sodann gegenüber einer Strukturätzung besonders empfindlich zu sein. Für diese Art der Bearbeitung hat sich das Glas FOTURAN (eingetragene Marke) von der Firma Schott als besonders vorteilhaft erwiesen. Bei diesem Material handelt es sich um ein fotosensitives Glas, das selektiv auf verschiedene Weise strukturiert werden kann. Dabei wird von einer Fotostrukturierung ausgegangen. Eine Maske wird auf dem fotoempfindlichen Glas aufgebracht. Das maskierte Glas wird einer UV-Belichtung ausgesetzt, wobei die nicht durch die Maske abgedeckten Bereiche fotochemisch reagieren. Anschließend wird die Maske entfernt und das Glas getempert. Schließlich wird eine Ätzung mit Flußsäure oder dergleichen durchgeführt, wobei die Lochstruktur besonders vorteilhaft ist. Durch die relativ scharfkantige Belichtung werden durch die nachfolgende Ätzung vergleichsweise scharfe und glatte Ränder der Löcher bzw. Öffnungen ausgebildet, wobei vorteilhafterweise keinerlei Unterätzungen auftreten. Dementsprechend können die Öffnungsränder bzw. -wandungen nachfolgend vergleichsweise gut beschichtet werden, etwa mit der oben angesprochenen ITO-Beschichtung.

Alternativ ist es auch möglich, die erste durchsichtige Platte, beispielsweise durch Dotierung mit den leitenden Bereichen, auszustatten. Hierbei könnte ebenfalls eine Maskierung der ersten durchsichtigen Plane erfolgen, wobei anschließend über thermische Dotierung oder über einen Beschuß mit Leiterteilchen in einem Beschleuniger Material bereichsweise in die erste durchsichtige Platte eingebracht werden könnte, um die leitenden Bereiche auszubilden.

Um eine möglichst gleichmäßige Flächenbelegung gewährleisten zu können, sollten die Zuleitungen so großflächig wie möglich sein. Ferner sollten auch die Elektroden und Gegenelektroden jeweils so großflächig wie möglich sein. Durch die großflächige Ausgestaltung der Elektroden, der Zuleitungen zu den Elektroden, der Gegenelektroden und der Zuleitungen zu den Gegenelektroden kann es gewährleistet werden, daß das durch den Strahlengang einer Belichtungsvorrichtung hindurchgehende Licht gleichmäßig behandelt wird, so daß eine nachteilige Beeinflussung des Belichtungsprozesses vermieden werden kann. Mit der größeren Fläche der Zuleitungen wird auch deren ohmscher Widerstand kleiner.

Wenn in der ersten Plane Öffnungen für den Anschluß der Zuleitungen an die Elektroden vorgesehen sind, so beeinflußt die regelmäßige Lochstruktur das Licht während eines Beleuchtungsvorganges. Um diesen Effekt soweit als möglich zu reduzieren, werden die Öffnungen mit einem weitgehend durchsichtigen Füllmaterial, etwa einem Kunstharz, einem Kitt oder dergleichen, soweit als möglich, bevorzugt luftfrei bzw. ohne Gaseinschlüsse, gefüllt. Dies ist auch notwendig, damit der Flüssigkristall eingeschlossen bleibt.

Um eine Beeinflussung der LCD-Einrichtung gemäß der Erfindung bzw. insbesondere auch deren Flüssigkeitkristallfluid durch das Lichtspektrum einer Lichtquelle in einer Belichtungsvorrichtung auszuschließen, kann die LCD-Vorrichtung gemäß der Erfindung mit einem UV-Schutz versehen werden. Der UV-Schutz wird auf wenigstens einer der Platten aufgebracht. Zur Vermeidung von Reflexionen kann auch auf jeder der Platten der LCD-Einrichtung ein UV-Schutz aufgebracht werden, wenn nämlich Bestandteile der erfindungsgemäßen LCD-Einrichtung besonders UV-empfindlich sind.

Um die Anzahl von Anschlüssen an die erfindungsgemäße LCD-Einrichtung zu reduzieren, können jeweils zwei Gegenelektroden zweier benachbarter Bildelemente über eine Zuleitung mit Signalen, insbesondere AC-Signalen, beaufschlagt werden (Duplex-Betrieb). Dabei ist zu berücksichtigen, daß die LCD-Einrichtung gemäß der Erfindung besonders bevorzugt mit PDLC als Flüssigkeitkristallfluid ausgebildet werden kann, das keinen Gleichstromkomponenten ausgesetzt werden darf, da PDLC-Materialien (PDLC = Polymer Dispersed Liquid Crystal) durch Gleichströme beeinträchtigt bzw. zersetzt werden, wie die meisten anderen Materialen für LCDs auch. Dementsprechend wird es gemäß der vorliegenden Erfindung bevorzugt, wenn die LCD-Einrichtung mit Merkmalen gemäß der Erfindung mit einem PDLC-Material als Flüssigkeitkristallfluid versehen sind. Im Hinblick auf die PDLC-Materialien wird auf Hikmet R.A.M.: "Electrically induced scattering from anisotropic gels", J. Appl. Phys., Vol. 68, Nr. 9, Seiten 4406-4412, November 1990, verwiesen, wobei deren Inhalt ausdrücklich zum Inhalt der vorliegenden Offenbarung gemacht wird. Einzelne oder mehrere der dort offenbarten PDLC-Substanzen, auch in Kombination, werden in die vorliegende Offenbarung einbezogen.

Natürlich ist auch ein Multiplexbetrieb für die LDC-Einrichtung mit Merkmalen gemäß der Erfindung möglich, jedoch wird ein Duplex-Betrieb bevorzugt, wobei eine Zusammenfassung von jeweils zwei benachbarten Bildelementen erfolgt, wobei zwei Systeme von Gegenelektroden mit zusammengefaßten Bildelementen über verschiedenen Gegenelektroden, welche mit verschiedenen, z.B. komplementären Signalen angesteuert werden, zur Reduktion der erforderlichen Anschlüsse und Zuleitungen eingesetzt werden.

Um eine besonders vorteilhafte Ansteuerung der Bildelemente der erfindungsgemäßen LCD-Einrichtung gewährleisten zu können, sollten diese so ausgebildet sein, daß sie mit binären AC-Signalen beaufschlagbar sind. Wichtig ist, daß die über dem LC (Flüssigkristall) anliegende Spannungsdifferenz mittelwertsfrei ist. Natürlich können hier auch alternierende Analogsignale zur Steuerung verwendet werden. Dabei wird es bevorzugt, daß an die Elektroden der Bildelemente bzw. die Zuleitungen der Elektroden Signale anlegbar sind, die sich in durchsichtigem Zustand der Bildelemente im wesentlichen zu einem elektrischen Feld zeitlich mitteln bzw. aufsummieren, dessen Effektivwert in etwa gleich Null ist bzw. unterhalb der Perkulations- bzw. Korrelationsgrenze des Flüssigkeitkristallsfluids liegt. Andererseits wird es bevorzugt, wenn an die Elektroden der Bildelemente bzw. deren Zuleitungen Signale anlegbar sind, die sich im undurchsichtigen bzw. lichtstreuenden und/oder -absorbierenden Zustand der Bildelemente zu einem Signal zeitlich mitteln bzw. aufaddieren, dessen Effektivwert oberhalb der Perkulations- bzw. Korrelationsgrenze des Flüssigkeitkristallfluids liegt. Im Hinblick auf PDLC-Materialien ist es dabei wesentlich, daß die Signale, wie bereits angedeutet, alternierend bzw. AC-Signale sind. Gleichstrom- bzw. Gleichspannungskomponenten in den Ansteuersignalen für die Elektroden der Bildelemente sind jedenfalls soweit als möglich zu vermeiden.

Ein besonders bevorzugtes Verfahren, auch ob seiner Einfachheit, liegt darin, an die Elektroden der Bildelemente Signale anzulegen, die sich entweder derart mitteln bzw. aufsummieren, daß die Bildelemente durchlässig sind, oder so, daß diese undurchlässig sind, wobei eine pro Bildelement durchzulassende Lichtmenge über die Zeit eingestellt wird, über die das Bildelement nicht streuend bzw. streuend ist.

Um verschiedene Farbempfindlichkeiten eines zu belichtenden Bildmaterials zu berücksichtigen, kann jeder der Farbbereiche, für die ein zu belichtendes Bildmaterial eine spezifische Empfindlichkeit aufweist, vorteilhafterweise separat berücksichtigt werden, wobei bevorzugt eine farbselektive Filtereinrichtung einsetzbar ist. Dabei können Farbfilter in den Strahlengang der Belichtungsvorrichtung eingeführt werden und für jeden der Filter kann jeweils eine Belichtung vorgenommen werden, wobei verschiedene Bildelemente über bestimmte Zeiten durchsichtig bzw. undurchsichtig, d.h. beispielsweise in einem bestimmten zeitlichen Verhältnis streuend oder nichtstreuend, gehalten werden können.

Das erfindungsgemäße Verfahren zur Herstellung einer LCD-Einrichtung mit den voranstehend aufgeführten Vorteilen basiert auf den folgenden Schritten: Zunächst wird eine Platte bzw. die erste Platte, bevorzugt aus einem durchsichtigen Material, insbesondere FOTURAN, mit einer Öffnungsmaskierung versehen, die zur Herstellung der leitenden Bereiche bzw. Durchführungenen eingesetzt wird. Die erste Platte wird nun einer materialabtragenden Behandlung unterzogen, um die Öffnungen in der ersten Plane zu bilden. Ein Material, das im sichtbaren Bereich des Lichtes im wesentlichen durchsichtig ist, wird anschließend auf beiden Seiten der ersten Platte aufgebracht. Dieses Material, bevorzugt ITO, dient zur Ausbildung der Elektroden der Bildelemente der LCD-Einrichtung einerseits und zur Ausbildung der Leiterbahnen und Durchführungen, die Steuersignale den Elektroden zuführen sollen, andererseits. Die zweite Platte wird einseitig ITO-beschichtet und für die Ausbildung der Gegenelektroden strukturiert, sowie anschließend planparallel und zu der ersten Plane beabstandet an dieser befestigt. In den Zwischenraum zwischen den beiden Planen wird dann ein Flüssigkeitkristallfluid eingefüllt, bevorzugt PDLC.

Das durchsichtige Material, bevorzugt ITO, wird mittels einer Temperaturbehandlung leitend gemacht. Das Beschichtungsmaterial wird im Falle von ITO nach der Strukturierung minels einer Temperaturbehandlung transparent gemacht. Zunächst ist die dünne Schicht nach dem Aufdampfen nicht transparent, dafür leicht ätzbar (HCl). Nach der Temperung (Oxidation) ist sie transparent, aber nur noch schwer ätzbar (Flußsäure). Andererseits könnte durchsichtiges Material natürlich auch durch eine Dotierung oder dergleichen strukturiert leitend gemacht werden. So könnte beispielsweise auch eine vollkommen geschlossene Materialschicht oder unmittelbar ein Glas verwendet werden, um dieses oberflächlich zu dotieren, und zwar so, daß nur in den Elektroden- bzw. Leiterbereichen neben der durchsichtigen Eigenschaft eine elektrische Leitfähigkeit vorhanden wäre. Hier könnte beispielsweise eine maskierende Beschichtung aus Aluminiumoxid ($Al_2O_3$) auf einem Glassubstrat, etwa auch FOTURAN, aufgebracht werden, um anschließend eine temperaturinitiierte Dotierung oder auch eine Dotierung aufgrund eines Beschusses mit Borionen oder dergleichen so einzubringen, daß damit eine Elektroden- und Leiterstruktur erzeugt wird. Diese Vorgehensweise hat dann den Vorteil, daß eine gleichmäßige Struktur vorhanden wäre, wobei jedoch eine vergleichsweise hohe Dotierung erforderlich wäre, um die notwendige Leitfähigkeit bereitstellen zu können. Im Falle einer Dotierung mittels Ionenbeschuß könnten hier optische Streuzentren entstehen, die zu Störungen führen könnten.

Wenn die erste Platte einer materialabtragenden Wandlung unterzogen wird, um die Öffnungen für die leitenden Bereiche in die erste Platte einzubringen, kann dies mittels einer reaktiven Bearbeitung, beispielsweise einer Naß- bzw. Trockenätzung durchgeführt werden. Wenn hier FOTURAN eingesetzt wird, kann mittels Flußsäure-Chemie eine Ätzung durchgeführt werden.

Bei der Aufbringung des Materials auf die erste und/oder die zweite Platte, wobei dieses Material im sichtbaren Bereich des Lichtes im wesentlichen durchsichtig ist, kann eine herkömmliche Aufdampf- oder Sputtertechnologie Verwendung finden. Wenn die erste Platte beschichtet wird, kann diese zunächst von der einen Seite und anschließend von der anderen Seite beschichtet werden. Die Beschichtung der beiden Seiten kann nacheinander erfolgen, jedoch gibt es auch Halterungen mit Getrieben, beispielsweise Planetengetrieben, die dazu in der Lage sind, eine ganzflächige Beschichtung durchzuführen. Dabei ist es wesentlich, daß die erste Platte relativ zu der Aufdampf- oder Sputtergutquelle geneigt gedreht wird, etwa in einem Winkel von ca. 35° bis ca. 60°, bevorzugt etwa 45°, um die Öffnung bzw. deren Wandungen zu beschichten, wobei auch eine Kantenabdeckung zwischen der Plattenoberfläche und den Öffnungswandungen wesentlich ist. Dabei kann die erste Platte auch eine Taumelbewegung durchführen, wobei bevorzugt eine mittlere Neigung von 35° bis 60°, insbesondere etwa 45°, zu der Aufdampf- bzw. Sputterquelle, sehr vorteilhaft ist.

Wie bereits oben angedeutet, sollte bei Fertigstellung der LCD-Einrichtung gemäß der Erfindung eine Deckschicht aufgebracht werden, die UV-abweisend bzw. UV-absorbierend ist. Dies kann in Form eines UV-Schutzglases, aber auch in Form einer UV-Schutzfolie geschehen. Die Öffnungen für die leitenden Bereiche in der ersten Platte können nach der Beschichtung mit wenigstens im wesentlichen durchsichtigem Material zumindest im wesentlichen aufgefüllt werden. Natürlich ist es besonders vorteilhaft, wenn die Öffnungen vollständig gefüllt werden können, da Luftblasen oder dergleichen als Streuzentren für Licht nachteilig ins Gewicht fallen können. Dabei kann in die Öffnungen ein durchsichtiges Material eingebracht, erwärmt und anschließend einem Vakuum ausgesetzt werden, so daß vorhandene oder zurückgebliebene Luftblasen aufgrund des geringeren Außendrucks entweichen können.

Bei dem Auffüllen der Öffnungen für die leitenden Bereiche kann gleichzeitig mit dem Auffüllen der Öffnungen mit einem Kunstharz, Kit oder dergleichen, die UV-abweisende bzw. -absorbierende Deckschicht bzw. das UV-Schutzglas oder dergleichen, auf die erste Platte aufgeklebt werden.

Auf der zweiten Platte werden Gegenelektroden und Zuleitungen zu diesen ausgebildet. Da bei einer bevorzugten Ausführungsform nach der vorliegenden Erfindung eine Duplexansteuerung maximal möglich ist, um das erforderliche Kontrastverhältnis für die erfindungsgemäß bevorzugten PDLC-LCD-Einrichtungen zu erzielen, können jeweils lediglich zwei Bildelementelektroden mit dem gleichen bzw. demselben Signal angesteuert werden. Dies ermöglicht es einerseits, die Anzahl der erforderlichen Signalzuleitungen zu halbieren. Beispielsweise für eine 20x30 Matrix von 600 auf 300. Anstelle einer einzigen Gegenelektrode sind dann zwei getrennte Gegenelektrodensysteme mit unterschiedlichen, für einen Duplexbetrieb geeigneten Signalen anzusteuern.

Es sei noch darauf hingewiesen, daß zur Herstellung der Öffnungen in einer durchsichtigen Platte natürlich auch andere Verfahren eingesetzt werden können. So könnten die erforderlichen Öffnungen beispielsweise auch mittels eines Lasers eingebracht werden.

Nachfolgend wird die vorliegende Erfindung anhand bevorzugter Ausführungsformen erläutert, die mit Merkmalen gemäß der Erfindung ausgestattet sind. Dabei werden unter Bezugnahme auf die beigefügten Darstellungen weitere Merkmale, Zielsetzungen und Vorteile gemäß der Erfindung offenbart, wobei:

Fig. 1        einen Aufbau einer Belichtungsvorrichtung mit einer LCD-Einrichtung mit Merkmalen gemäß der Erfindung in einer schematischen Schnittansicht zeigt;

Fig. 2        eine zweite Belichtungsvorrichtung mit einer LCD-Einrichtung mit Merkmalen gemäß der Erfindung in einer zu Fig. 1 korrespondierenden Ansicht zeigt;

Fig. 3                  eine Anordnung einer LCD-Einrichtung mit Merkmalen gemäß der Erfindung zeigt;

Fig. 3A                 eine Öffnung für einen leitenden Bereich bzw. eine elektrisch leitende Durchführung in einer LCD-Einrichtung mit Merkmalen gemäß der Erfindung zeigt;

Fig. 4                  einen Elektrodenplan einer LCD-Einrichtung mit Merkmalen gemäß der Erfindung zeigt;

Fig. 4A                 einen Auschnitt aus der Leiterebene der LCD-Einrichtung gemäß Fig. 4 zeigt;

Fig. 5                  die LCD-Einrichtung nach den Fig. 3, 4, 4A mit einer zusätzlichen Ebene mit Gegenelektroden zeigt;

Fig. 6                  die LCD-Einrichtung nach den Fig. 3 bis 5 in einer Draufsicht zeigt;

Fig. 6A                 die LCD-Einrichtung gemäß Fig. 6 in einer Schnittansicht zeigt;

Fig. 7                  Schaltkurven einer LCD-Einrichtung mit Merkmalen gemäß der Erfindung zeigt;

Fig. 8A bis 8E          ein Ansteuerungsschema für ein Bildelement-Paar einer LCD-Einrichtung mit Merkmalen gemäß der Erfindung zeigt; und

Fig. 9                  einen Verfahrensablauf zur Herstellung einer LCD-Einrichtung mit Merkmalen gemäß der Erfindung zeigt.

In den Figuren sind identische oder wenigstens funktionsgleiche Bestandteile jeweils in der Regel mit den gleichen Bezugszeichen bezeichnet worden. Erläuterungen zu einem Bestandteil mit einem bestimmten Bezugszeichen sind dementsprechend auch Bestandteilen anderer Figuren zuzuordnen, die mit den gleichen Bezugszeichen beschriftet sind.

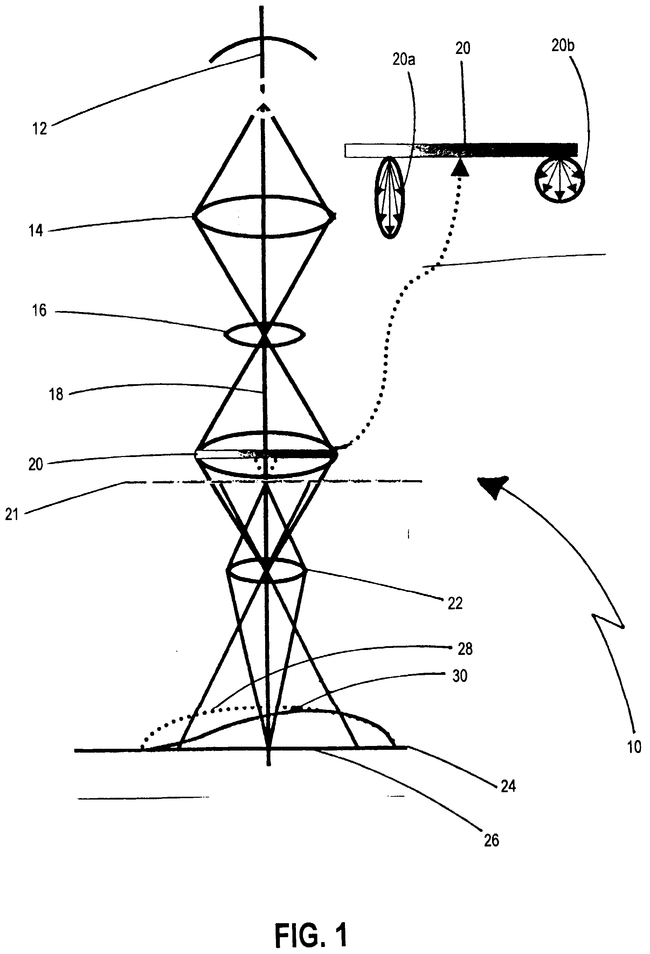

In Fig. 1 wird eine Belichtungsvorrichtung 10 allgemein dargestellt, die eine LCD-Einrichtung 20 mit Merkmalen gemäß der Erfindung aufweisen kann.

Ausgehend von einer Lichtquelle 12 wird ein Lichtstrahl über eine optische Anordnung 14, 16 entlang einer optischen Achse 18 durch ein Materialband von Negativen 21 hindurchgestrahlt. Vor dem Negativ 21 ist die LCD-Einrichtung 20 mit Merkmalen gemäß der Erfindung angeordnet.

Die rechts oben vergrößert in Fig. 1 hervorgehobene LCD-Einrichtung 20 weist abgedunkelte Bereiche 20b auf, die zu einer größeren Lichtstreuung führen, so daß in diesem Bereich weniger Licht vom Objektiv 22 erfaßt wird. Umgekehrt sind Bereiche 20a vorhanden, die nur wenig oder gar nicht bzw. nur über eine kurze Zeit oder gar nicht abgedunkelt sind. Dementsprechend kann die gegenüberliegende Seite 20b der LCD-Einrichtung 20 über längere Zeit abgedunkelt sein.

Das die LCD-Einrichtung 20 passierende Licht durchleuchtet anschließend das Negativ 21 und wird durch die Optik 22 auf ein Papierfoto 26 eines Bandes 24 mit fotoempfindlichem Material abgebildet. Hier zeigt die Kurve 28 über dem Abzug 26 an, wie die Lichtintensität über dem Abzug 26 verläuft, wenn die LCD-Einrichtung 20 nicht streuend ist. Die durchgezogene Linie 30 zeigt an, wie der Intensitätsverlauf des Lichtes ist, wenn die LCD-Einrichtung, wie in Fig. 1 rechts oben dargestellt, asymmetrisch streuend betreiben wird. Dementsprechend ist die Kurve 30 entsprechend der Hell-Dunkel-Abstufung der LCD-Einrichtung 20 oberhalb der Materialbahn 24 bzw. oberhalb des zu belichtenden Abzuges 26 asymmetrisch bzw. einseitig verzerrt.

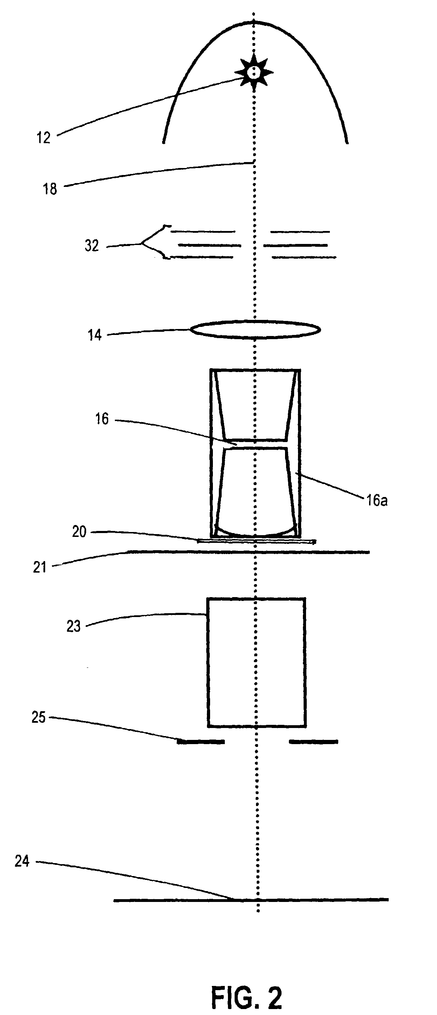

In Fig. 2 ist im Strahlengang 18 hinter der Lichtquelle 12 eine subtraktive Filtereinrichtung 32 vorgesehen. Hier können subtraktive Filter für verschiedene Farben, beispielsweise Gelb, Magenta und Cyan, jeweils mehr oder weniger in den Strahlengang eingeführt werden, um mehr oder weniger Licht einer bestimmten Farbe passieren zu lassen. Die Belichtungszeit bei einer derartigen Vorrichtung, wie sie in den Fig. 1 und 2 dargestellt ist, kann im Mittel etwa 30 ms betragen, kann jedoch hiervon auch ganz erheblich abweichen, je nachdem, ob ein Bild zu hell oder zu dunkel fotografiert worden ist.

Im Strahlengang 18 ist zusätzlich ein Lichtschacht 16a vorgesehen, zwischen dessen Wänden eine Streuscheibe 16 angeordnet ist. Diese Anordnung dient dazu, das Licht der Lichtquelle 12, die beispielsweise eine Halogenlampe mit einer Wendel sein kann, und das durch die subtraktive Filtereinrichtung 32 hindurchtritt, zu homogenisieren. Ferner kann dieses homogenisierte Licht dazu führen, daß etwaige Kratzer auf dem Negativfilm 21 kaum noch oder gar nicht mehr zu erkennen sind.

Jenseits des Lichtschachtes 16a ist wiederum eine LCD-Einrichtung 20 mit Merkmalen gemäß der Erfindung vorgesehen.

Diese kann gemäß den Notwendigkeiten, die sich aus den über- bzw. unterbelichteten Abschnitten eines abzubildenden Negativs 21 ergeben, bereichsweise graduell abgedunkelt bzw. zeitweise abgedunkelt werden.

Letztlich kann noch ein automatisch gesteuertes Zoomobjektiv 23 in Verbindung mit einer Blende 25 vorgesehen sein, um das Negativ eventuell vergrößert auf den Abzug 24 abzubilden.

Gemäß der Erfindung wird es bevorzugt, daß die LCD-Einrichtung als Flüssigkeitkristallmaterial ein PDLC-Material enthält, da dieses eine wesentlich bessere Lichtausbeute zuläßt. Würde ein anderes Material verwendet werden, müßte die Lichtquelle 12 von beispielsweise 500 Watt auf etwa 2500 Watt aufgerüstet werden, um ausreichend Licht durchzulassen. Natürlich könnte auch die Belichtungsdauer erheblich verlängert werden, wobei dann jedoch eine Dauer pro Einzelbelichtung von im Mittel 150 ms den Wirkungsgrad einer entsprechenden Belichtungsvorrichtung so herabsetzen würde, daß das fotografische Kopiergerät infolge geringen Durchsatzes kaum mehr konkurrenzfähig wäre.

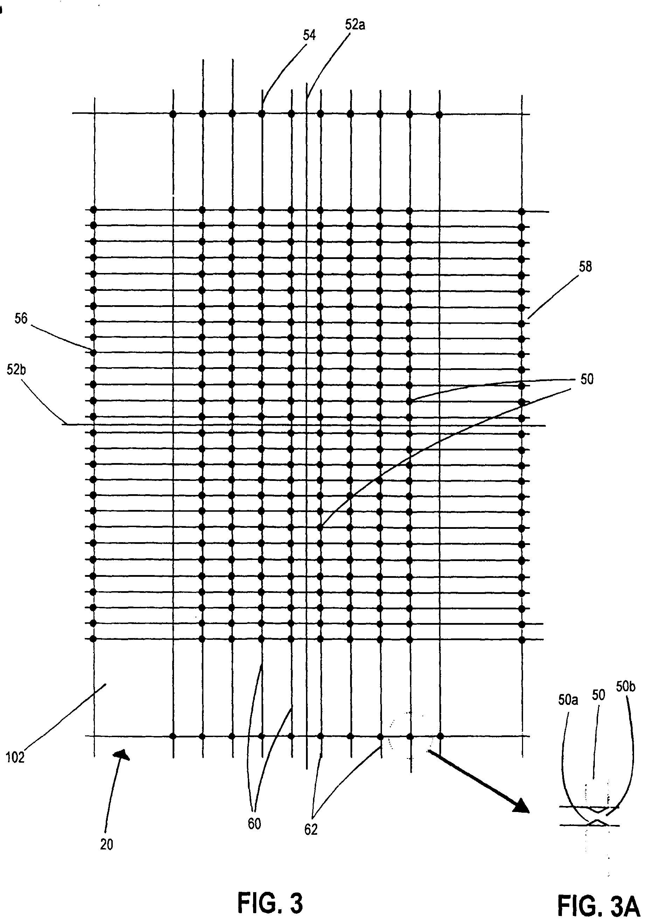

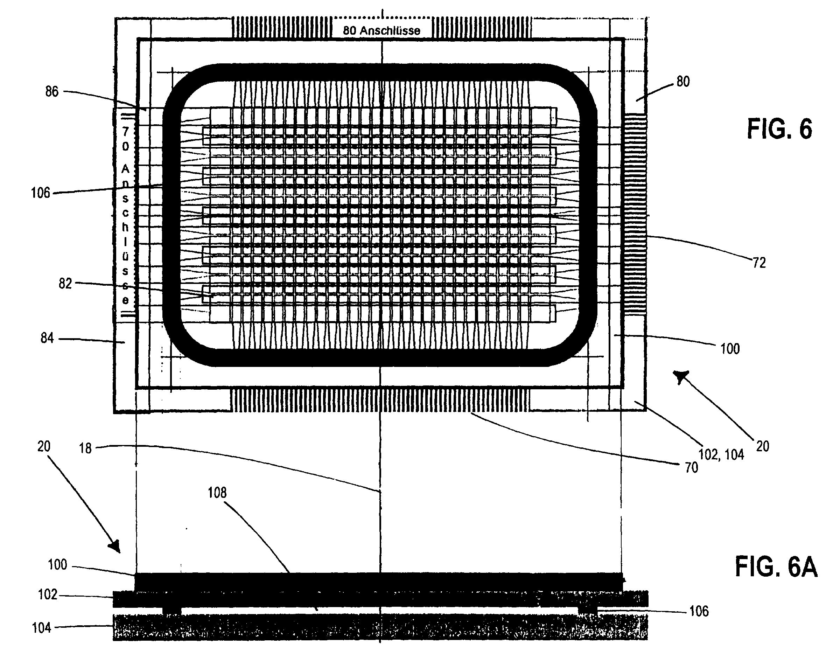

In Fig. 3 ist eine durchsichtige Platte 102 einer LCD-Einrichtung 20 mit Merkmalen gemäß der Erfindung dargestellt. Diese durchsichtige Plane, die in den Ansprüchen als erste Platte bezeichnet wird, weist verschiedene Öffnungen auf, um hierdurch leitende Bereiche bzw. Durchführungen in der Platte 102 herzustellen. Die Leiterbahnen werden an den Rand der Platte geführt ("Anschlüsse" in Fig. 6), so daß später eine Kontaktierung der Matrix mittels "Flexiprints" erfolgen kann.

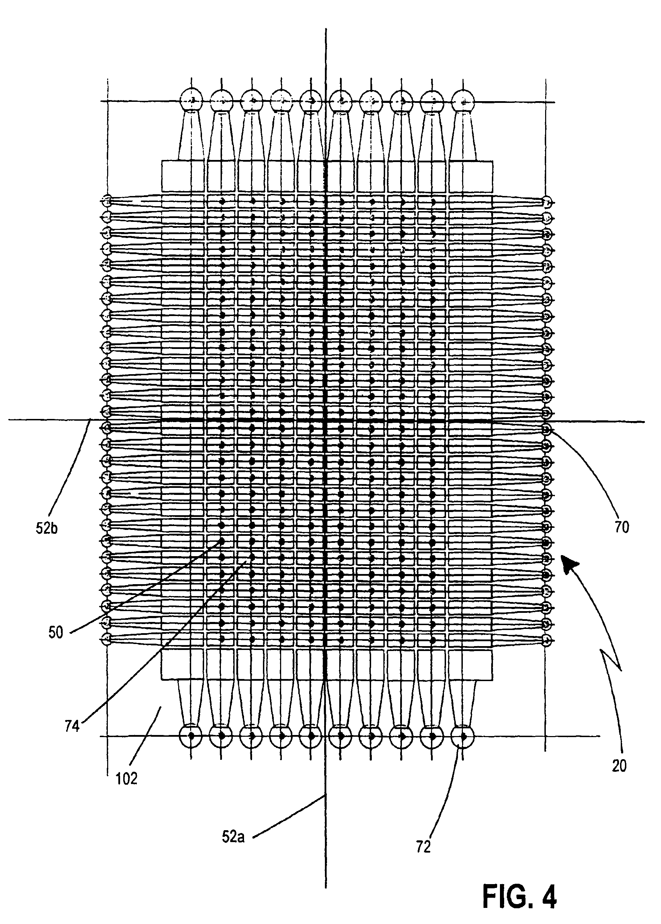

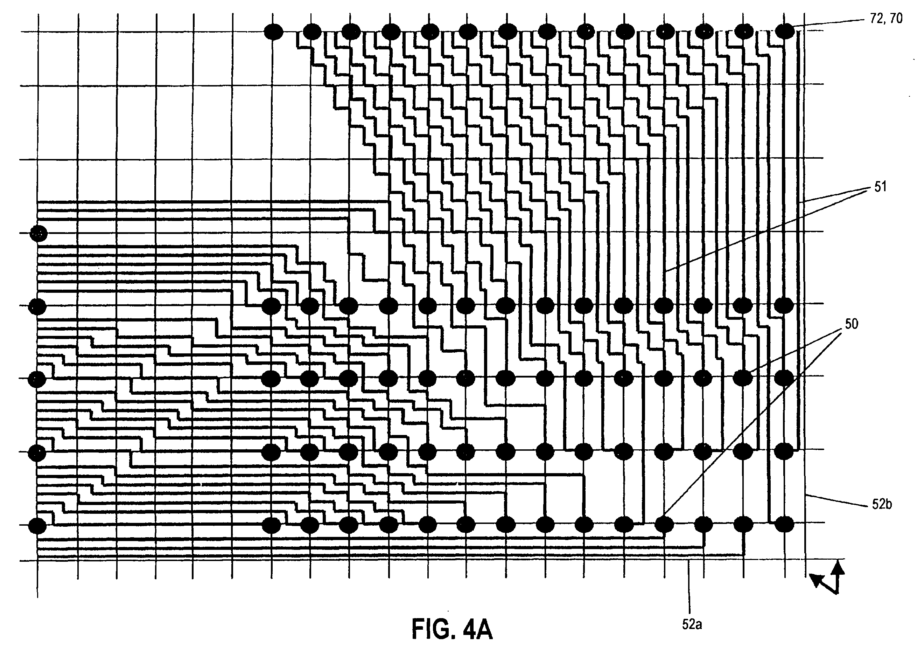

Die Öffnungen 54, 56, 58, 62 haben genau dieselbe Funktion wie die zentralen Öffnungen 50, d.h. sie dienen als Durchführugen zu den (peripheren) Elektroden des LCDs. Um genügend Raum für die Zuleitungen freizulassen (Fig. 4A) sind sie jedoch nicht (wie die zentralen Öffnungen) über dem Zentrum des entsprechenden Bildelementpaares angeordnet, sondern weiter nach außen verschoben. Entsprechend sind die Anschlüsse der peripheren Elektroden in Fig. 4 nach außen verlängert.

Wie zu erkennen ist, ist die Platte 102 bzw. ist das Öffnungsschema der Platte 102 um die Achsen 52a, 52b symmetrisch, wobei im späteren Betrieb in einer Belichtungsvorrichtung nach beispielsweise einer der Fig. 1 oder 2 die optische Achse 18 der Vorrichtung durch den Kreuzungspunkt der Geraden 52a, 52b verläuft.

Später vorzusehende Leiterbahnen können natürlich auch abgerundet verlaufen, jedoch wird es bevorzugt, daß sich diese im wesentlichen geradlinig parallel zu den Konstruktionshilfslinien 60, 60a erstrecken (siehe hierzu auch Fig. 4A).

Die Öffnungen 50 sollten nach Möglichkeit eine spezifische geometrische Ausgestaltung haben, die eine Beschichtung der Wandungen der Öffnungen 50 nicht übermäßig erschweren. Eine typische geometrische Ausbildung einer Öffnung 50 ist dementsprechend aus Fig. 3A ersichtlich, aus der zu ersehen ist, daß die Wandung bikonisch verläuft, so daß bei einem entsprechenden Einfallswinkel eines aufzudampfenden bzw. aufzusputternden Materials auch die Wandungen der Öffnungen durchgehend beschichtet werden können. Dabei ist natürlich auch darauf zu achten, daß der Durchmesser der Öffnung 50 am oberen Rand so bemessen ist, daß die Ränder während eines Beschichtungsvorganges nicht abschattend wirken. Dementsprechend muß auch das Verhältnis zwischen Öffnungsdurchmesser und Öffnungslänge, das heißt der Dicke der Platte 102 entsprechend beziffert sein. Die Öffnungsabsehnitte 50a und 50b sind aufgrund einer Naßätzung und einem spezifischen Verhalten eines mit einer Silberverbindung, die fotoempfindlich ist, versetzten Glasmaterials jeweils konisch bzw. trapezförmig verlaufend, so daß sich insgesamt ein "tailliertes" Öffnungsprofil ergibt.

Dementsprechend können sich rein beispielhaft für eine Platte 102 folgende Abmessungen ergeben. Der Lochdurchmesser kann 0,3 mm betragen, während die Lochtiefe 0,5 mm beträgt, das heißt, die Platte 102 ist 0,5 mm dick. Der für eine Steuerung der Lichtintensität infrage kommende Bereich erstreckt sich über einen Bereich, der einerseits kleiner ist als das durch die äußersten Reihen der Öffnungen 50 definierte Rechteck, andererseits aber größer ist als das durch die zweitäußersten Reihen definierte Rechteck. Hierdurch kann sich beispielsweise ein aktiver Matrixbereich von etwa 30mm in der Erstreckungsrichtung der Achse 52b und von etwa 45 mm in Richtung der Achse 52a ergeben. Die Abstände zwischen den Öffnungen 50 im aktiven Bereich der Plane 102 kann in etwa 3 mm in der Erstreckungsrichtung der Achse 52b betragen, während der Abstand zwischen den einzelnen Öffnungen 50 in der Erstreckungsrichtung der Achse 52a in etwa beispielsweise 1,5 mm betragen kann. Etwaige weitere Abmessungen und Größenrelationen ergeben sich aus den beispielhaft angegebenen Abmessungen, da diese im weiteren Abmessungen, die beispielhaft anzunehmen sein können, für eine maßstabsgetreue Wiedergabe auch in bezug auf die Fig. 4, 4A, 5 und 6 rein beispielhaft angesetzt werden können.

In Fig. 4 ist eine Ebene von Bildelementelektroden 74 auf einer LCD-Einrichtung 20 dargestellt. Die Bildelementelektroden 74 weisen jeweils in etwa mittig die Öffnungen 50 mit den leitenden Bereichen bzw. Durchführungen auf, die die Bildelementelektroden 74 an Leiterbahnen anschließen, die auf der gegenüberliegenden Seite der Platte 102 angeordnet sind. Zwar sind hier die leitenden Bereiche bzw. die Öffnungen 50 mittig in den Bildelementelektroden 74 dargestellt, jedoch können diese auch anders plaziert sein. Die Anschlüsse 72, 70 dienen jeweils zum Anschließen von einer oder gegebenenfalls mehreren der Bildelementelektroden 74. Dabei können die Leiterbahnen an den Rand der Platte geführt werden, so daß später eine Kontaktierung mittels der besagten "Flexiprints" möglich wird.

Gemäß Fig. 4A wird eine Ebene mit Zuleitungen 51 dargestellt, die Signale für die Bildelektroden 74 gemäß Fig. 4 von den Anschlüssen 70, 72 zu den Öffnungen bzw. leitenden Bereichen 50 übermittelt, die dann über die leitenden Bereiche durch die erste Platte 102 (siehe Fig. 4) hindurch den Bildelementelektroden 74 zuführt. Die Zuleitungen 51 sollten dabei möglichst großflächig sein, um dem Licht, das durch die LCD-Einrichtung 20 hindurchkommt, möglichst weitgehend gleichen Bedingungen auszusetzen. Die Abstände zwischen den einzelnen Bildelementelektroden 74 bzw. zwischen den Leitern können dabei zwischen 10 μm und 50 μm eingestellt sein. Auf diese Weise sollten einerseits Fertigungstoleranzen und andererseits Nachteile durch elektrische Kurzschlüsse zwischen den Elektroden vermieden werden können, während gleichzeitig das durch die LCD-Einrichtung 20 hindurchtretende Licht kaum oder nicht nachteilig beeinflußt wird.

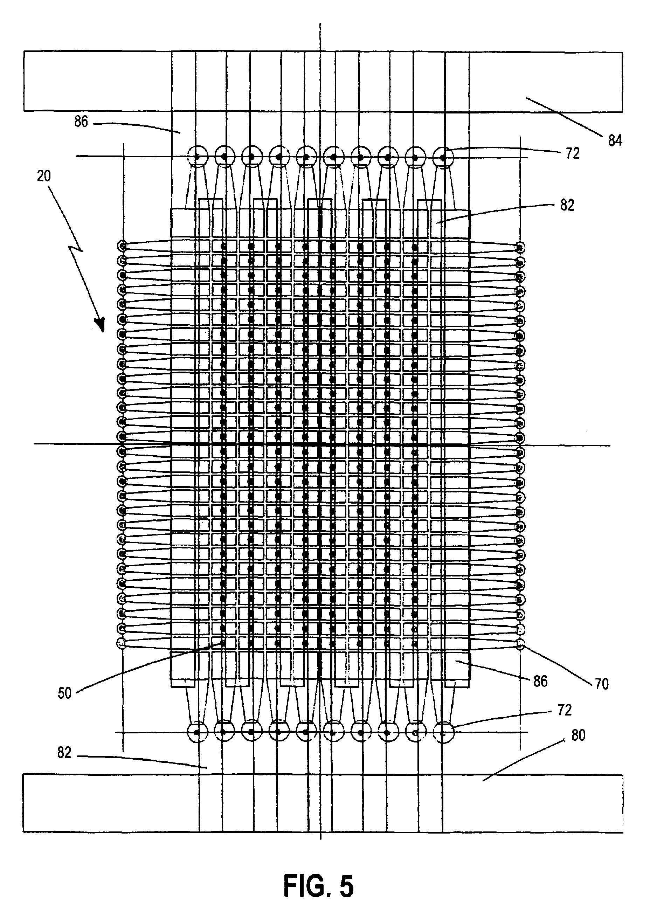

Fig. 5 zeigt zusätzlich die Ebene der Gegenelektroden 82, 86, die nach einem Duplexverfahren jeweils gegenüber zwei benachbarter Bildelementelektroden 74 (siehe Fig. 4) angelegt werden. Eine Ansteuerung der Gegenelektroden 82, 86 erfolgt über Kontakte bzw. Kontaktraster 80, 84. Die Gegenelektroden sind dabei auf einer separaten Platte aus durchsichtigem Material, der zweiten Platte (104 gemäß Fig. 6A), vorgesehen.

Die verschiedenen Bestandteile der ersten Plane 102 sind hier aufgrund der Transparenz der LCD-Einrichtung gemäß der Erfindung mit aufgeführt, werden jedoch, da sie bereits unter Bezug auf die Fig. 3, 4 und 4A beschrieben worden sind, hier nicht nochmals erwähnt.

Fig. 6 bzw. Fig. 6A zeigen die Gesamtheit der Bestandteile einer LCD-Einrichtung mit den verschiedenen Ebenen gemäß den Fig. 3 bis 5 in einer Gesamtansicht. Eine UV-Schutzplatte 100, bevorzugt aus Glas, deckt wenigstens das Volumen 108 ab, in dem sich das Flüssigkeitkristallfluid befindet. Das Flüssigkeitkristallfluidvolumen 108 wird durch Abstandshalter 106 zwischen den Planen 102 und 104 bereitgestellt. Die Anschlüsse an den Rändern der Platte 102 sind soweit herausgezogen, daß sich die LCD-Einrichtung 20 über Klemmstecker oder Lötkontakte oder dergleichen relativ einfach kontaktieren läßt. Die Anzahl der Anschlüsse läßt sich Fig. 6 entnehmen.

Die Platte 102 kann bevorzugt aus FOTURAN (Marke der Firma Schott) gefertigt sein. Die Platte 104 kann aus einem einfachen durchsichtigen Material, beispielsweise einem optisch hochqualitativen Glas sein.

Wie bereits angedeutet, sollten sämtliche Elektroden, Gegenelektroden, Zuleitungen usw., die sich in dem aktiven Bereich der LCD-Matrix befinden, das heißt in dem Bereich, der zur Manipulation von Bilddaten verwendet werden soll, aus einem leitenden, durchsichtigen Material hergestellt sein, insbesondere ITO.

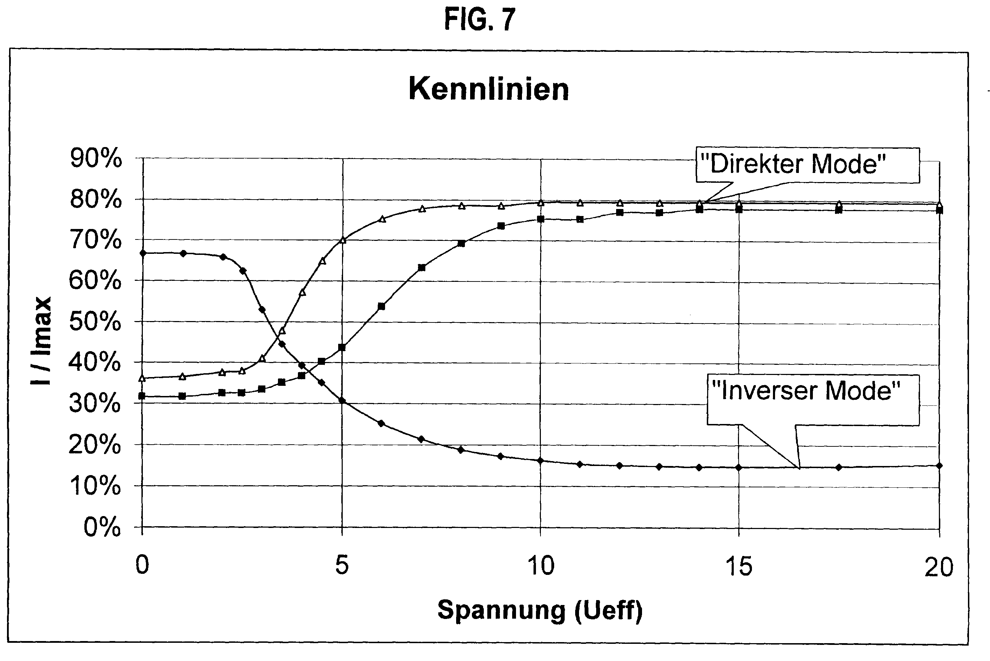

Fig. 7 zeigt, für drei verschiedene Ausführungen des PDLC-Flüssigkristalls, die gemessene relative Lichtintensität in der Ebene eines Fotopapiers, in Abhängigkeit von der über den Elektroden liegenden Effektivspannung. Man sieht daraus, daß zwei prinzipiell unterschiedliche Ausführungen möglich sind, nämlich eine, welche ohne angelegtes Spannungssignal streuend wirkt, und eine deren Streuwirkung mit zunehmendem Effektivwert des angelegten Spannungssignals zunimmt. In beiden Fällen kommt die Modulation der Lichtintensität dadurch zustande, daß mit zunehmender Streuung weniger Licht vom Objektiv erfaßt wird (siehe auch Fig. 1). Der Öffnungswinkel des für die Messungen verwendeten Objektivs beträgt beispielsweise etwa 10°.

Aus Fig. 7 ist außerdem ersichtlich, daß eine Veränderung der gemessenen Lichtintensität (d.h. des Streueffekts) erst ab einem gewissen Wert der Effektivspannung auftritt. Dieser Wert wird im folgenden als "Schwellspannung" bezeichnet.

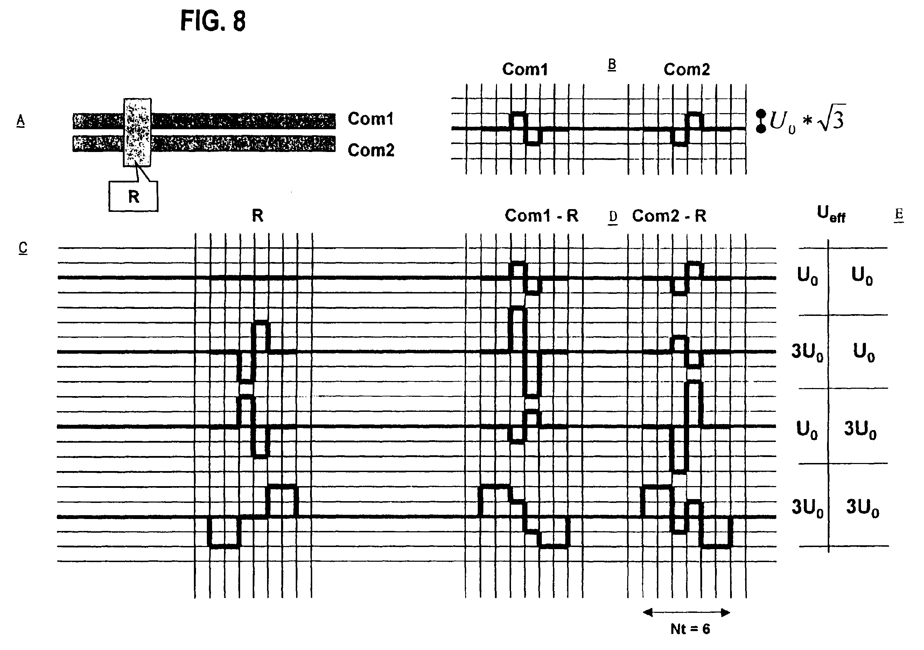

Fig. 8 zeigt eine mögliche Art der Ansteuerung eines LCDs mit Spannungssignalen, die eine optimale Duplex-Ansteuerung darstellt [siehe Nehring J., Kmetz A.: "Ultimate Limits for Matrix Addressing of RMs Responding Liquid Crystal Displays", IEEE Trans. Electron. Devices, vol. ED-26, S. 795-802, 1979]. Bei dieser Betriebsart werden jeweils zwei Bildelemente zu einer einzigen Elektrode zusammengefaßt, woraus sich eine Halbierung der Anzahl der erforderlichen Bildelementanschlüsse und Zuleitungen ergibt.

Fig. 8A zeigt ein Paar ("R") von zu einer Elektrode zusammengefaßten Bildelementen. Selbstverständlich soll die Streuwirkung des Flüssigkristalls im Bereich der einzelnen Bildelemente unterschiedlich sein können. Dies wird dadurch erreicht, daß man auf der den Bildelementen gegenüberliegenden Seite des Flüssigkristalls zwei mit unterschiedlichen Spannungssignalen angesteuerte Gegenelektroden (Com1, Com2) verwendet. Links und rechts von der dargestellten Bildelementelektrode "R" sind in Wirklichkeit weiter Bildelemenrpaare derselben LCD-Matrixreihe angeordnet, welche alle über demselben Paar von Gegenelektroden Com1 und Com2 liegen. Alle weiteren Reihen der LCD-Matrix verwenden Gegenelektrodenpaare, welche mit denselben Spannungssignalen wie Com1 und Com2 angesteuert werden (siehe dazu Fig. 5). Fig. 5B zeigt die an Com1 und Com2 angelegten periodischen Spannungssignale (dargestellt ist nur eine sich über sechs Zeitintervalle erstreckende Periode dieser Signale).

Fig. 8C (links) zeigt vier unterschiedliche Spannungssignale, welche wahlweise an die Bildelementelektrode angelegt werden können. Für das Verständnis des Duplexverfahrens stellt man sich diese Signale am besten auch als periodisch vor, obwohl, wie weiter unten dargelegt, für die Erzielung von "Graustufen" die vier dargestellten Signale in geeigneter Reihenfolge kombiniert werden können. Maßgebend für den Lichtmodulationseffekt ist die über dem Flüssigkristall resultierende Spannungsdifferenz, und zwar in erster Näherung deren Effektivwert (Wurzel des quadratischen Mittelwerts). Die resultierenden Spannungsdifferenzen sind in Fig. 8D dargestellt. Sie sind natürlich unterschiedlich, je nachdem ob sich das entsprechende Bildelement über der Gegenelektrode Com1 oder Com 2 befindet.

Die Tabelle Fig. 8E zeigt, daß mit diesem Ansteuerungsverfahren tatsächlich vier Zustände möglich sind. Die Effektivspannung über dem Flüssigkristall kann für jedes der beiden Bildelemente wahlweise Uo oder 3Uo betragen. Sinnvollerweise wird Uo etwa gleich der Schwellspannung des Flüssigkristalls (Fig. 7) gewählt, da sich so der "Spannungsmodulationsfaktor" von 3 in den größtmöglichen "Intensitätsmodulationsfaktor" (Kontrast) umsetzen läßt.

Die Schwellspannung von Flüssigkristallen ist temperaturabhängig (sie nimmt mit zunehmender Temperatur ab). Soll die Wirkungsstärke der LCD-Matrix über einen größeren Temperaturbereich erhalten bleiben, so ist es sinnvoll, die Amplituden der Spannungssignale (d.h. Uo) in Abhängigkeit der Temperatur zu steuern oder zu regeln. Diese Duplex-Ansteuerung kann den größtmöglichen Spannungsmodulationsfaktor erzielen.

Dieser Faktor nimmt mit zunehmender Ordnung des Multiplex (d.h. mit zunehmender Anzahl von Bildelementen, die zu einer Elektrode zusammengefaßt werden) ab. Aus diesem Grunde, und wegen dem relativ flachen Verlauf der Kennlinie von PDLC-Flüssigkristallen, wird bevorzugt ein Multiplex der Ordnung 2 (Duplex) verwendet.

Aus Fig. 8C ist ersichtlich, daß zur Ansteuerung der Bildelementelektroden dreiwertige Signale benötigt werden. Die elektronische Schaltung zur Generierung der Signale kann jedoch wesentlich vereinfacht werden, wenn statt dessen zweiwertige (binäre) Signale verwendet werden. Eine Ansteuerungsmöglichkeit mit binären Signalen ist in Anlage A beschrieben. Allerdings geht diese Vereinfachung auf Kosten des "Spannungsmodulationsfaktors", der nun statt 3 nur noch $1 + \sqrt{2}$ beträgt. Das geschilderte Verfahren ermöglicht es, jedes Bildelement in einen von zwei Zuständen zu versetzen ("Ein" und "Aus"). Zwar kann auch mit einer rein binären LCD-Matrix die ästhetische Erscheinung fotografischer Kopien verbessert werden, jedoch läßt sich die Qualität durch die Verwendung von Zwischenwerten ("Graustufen") wesentlich verbessern. Graustufen lassen sich mit dem geschilderten Ansteuerungsverfahren auf verschiedene Weise erzielen. Die zwei vorteilhaftesten sind:

- Variation des Verhältnisses $T_{ein}/T_{aus}$ innerhalb des Belichtungsintervalls $T_B = T_{ein} + T_{aus}$. Hier wird die Tatsache genutzt, daß das Fotopapier die (variable) Lichtintensität über das Belichtungsintervall $T_B$ integriert.
- Zeitliche Multiplexierung der vier verschiedenen Bildelementelektrodensignale. So kann z.B. eine periodische Ansteuerung verwendet werden, deren Grundperiode sich aus z.B. 16 Teilsequenzen zusammensetzt, welche wahlweise einer der vier in Fig. 8C dargestellten Signalformen entsprechen können. Ist die zeitliche Dauer der Grundperiode klein genug, so reagiert dabei der Flüssigkristall auf den Effektivwert des zusammengesetzten Signals, und es können für jedes Bildelement 16 Graustufen erzielt werden.

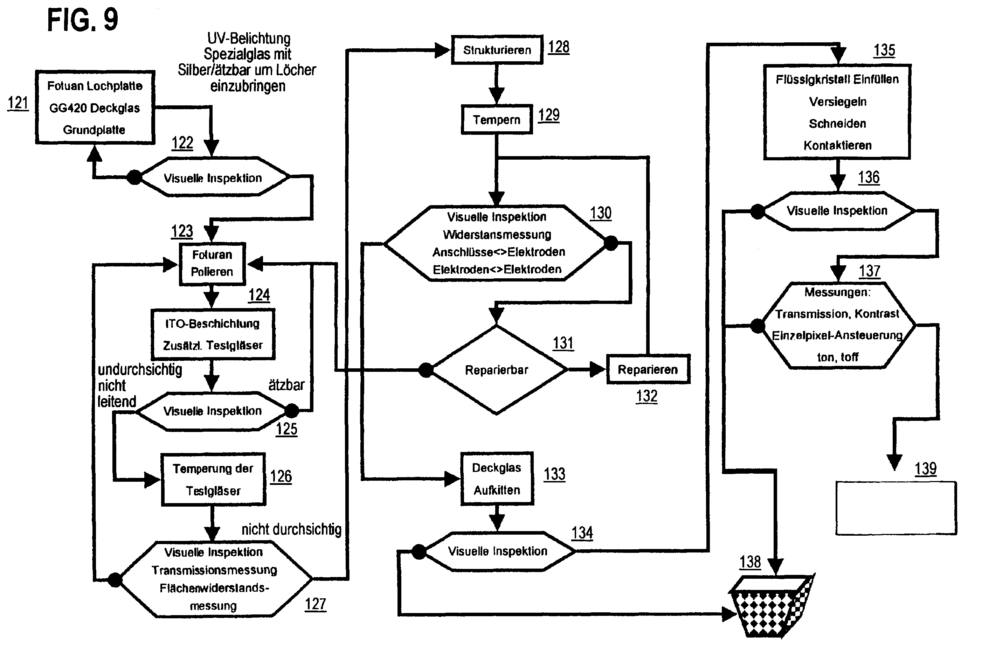

Aus Fig. 9 ist ein Ablauf eines Herstellungsverfahrens für eine LCD-Einrichtung mit Merkmalen gemäß der Erfindung ersichtlich. Ferner sind Qualitäts- und Eigenschaftsprüfschritte aus dieser Figur entnehmbar. Beim Schritt 121 wird eine FOTURAN-Glasplatte, ein UV-Schutzglas in der Form eines Deckglases und eine Grundplatte für die Gegenelektroden zur Herstellung einer LCD-Einrichtung mit Merkmalen gemäß der Erfindung bereitgestellt.

Es wird eine Maske auf die FOTURAN-Platte aufgetragen und so strukturiert, daß diese die Lochmaske ergibt, die zur Herstellung der leitenden Bereiche bzw. Durchführungen eingesetzt werden soll. Anschließend wird eine UV-Belichtung vorgenommen, auf die die fotoempfindliche Silberzusammensetzung innerhalb des Glases anspricht. Anschließend wird die FOTURAN-Platte getempert. Mittels Flußsäure wird dann geätzt, um die Öffnungen 50 in der Platte 102 entstehen zu lassen.

Für die Belichtungsmaske für das FOTURAN-Glas kann beispielsweise eine Chrom-Quarz-Maske verwendet werden. Ansonsten sind die Herstellungsanleitungen bzw. Bearbeitungsanleitungen einzuhalten, wie sie von dem Hersteller veröffentlicht worden sind, beispielsweise auch mit dem Informationsprospekt "FOTURAN - Ein Werkstoff für die Mikrosystemtechnik" der Firma Schott, veröffentlicht im Jahre 1995, die ausdrücklich zum Offenbarungsgehalt der vorliegenden Anmeldung zu zählen ist.

Nach der Fertigstellung der FOTURAN-Lochplatte 50 werden die verschiedenen Bestandteile der LCD-Einrichtung mit Merkmalen gemäß der Erfindung optisch bzw. visuell im Schritt 122 geprüft. Sind optische Fehler festzustellen, so wird versucht, die Bestandteile nachzubessern oder es werden andere Bestandteile bereitgestellt.

Im Schritt 123 wird die FOTURAN-Lochplatte poliert bzw. deren Oberfläche wird optisch aufbereitet.

Anschließend wird im Schritt 124 eine Beschichtung auf dem FOTURAN-Glas aufgebracht. Diese Beschichtung besteht aus dem unter der Bezeichnung ITO bekannten Material.

Um die Qualität der Beschichtung prüfen zu können, werden zusätzlich Testgläser mit beschichtet. Im Schritt 125 wird anschließend eine Prüfung der Beschichtung vorgenommen. Dabei wird unter anderem die optische Qualität der Beschichtung geprüft. Anschließend wird die ITO-Beschichtung, die auf den mit beschichteten Testgläsern aufgebracht ist, getempert, um die zuständigen Bestandteile in der ITO-Beschichtung leitend und transparent zu machen. Die Testgläser werden anschließend abermals geprüft, indem deren Leitfähigkeit gemessen wird, das heißt, indem deren Flächenwiderstand geprüft wird. Ferner wird die Durchlässigkeit der Gläser in Verbindung mit deren ITO-Beschichtung geprüft. Ist die Prüfung zufriedenstellend ausgefallen, wird die bislang nicht getemperte Lochplatte bzw. Grundplatte jeweils strukturiert, das heißt es werden die Leiterelektroden- bzw. Gegenelektrodenstrukturen mittels Fototechniken (Fotolackstruktur, Entwicklung, Ätzung oder dergleichen) in die ITO-Beschichtung abgebildet.

Anschließend erfolgt im Schritt 129 die Temperung der mit ITO beschichteten Bestandteile der LCD-Einrichtung mit Merkmalen gemäß der Erfindung.

Im Schritt 130 wird abermals eine Prüfung der wesentlichen Eigenschaften bzw. Bestandteile vorgenommen. Eine visuelle Inspektion, eine Widerstandsmessung, die Überprüfung der Anschlüsse und Elektroden und die Überprüfung der Qualität der elektrischen Verbindungen zwischen den diversen Elektroden und Anschlüssen wird durchgeführt. Wenn sämtliche Prüfungen und Messungen zufriedenstellend ausgefallen sind, wird ein Deckglas im Schritt 133 auf die Anordnung aufgebracht, bevor die Lochplatte und die Grundplatte über einen Abstandshalter miteinander verbunden worden sind. Das Deckglas besteht aus UV-absorbierendem bzw. -reflektierendem Material und schützt das Volumen, das für die Aufnahme des Flüssigkeitskristallfluids bestimmt ist, vor UV-Bestrahlung, die den Flüssigkeitskristall schädigen könnte. Bei dem Befestigen des Deckglases im Schritt 133 wird ein Kunstharz bzw. ein Kit oder dergleichen eingesetzt, so daß die verbliebenen Öffnungen in der FOTURAN-Lochplatte mit durchsichtigem Material aufgefüllt werden. Anschließend wird abermals eine Überprüfung im Schritt 134 vorgenommen, um zu erkennen, ob Luftblasen in den Öffnungen zurückgeblieben sind. Sind Luftblasen zurückgeblieben, ist es möglich, daß diese LCD-Einrichtungen nicht brauchbar sind, um damit einwandfreie Steuerungen bei der Abbildung eines Negativs auf einem Abzug durchzuführen.

Hat die Prüfung im Schritt 134 ergeben, daß die Qualität der wesentlichen Eigenschaften des Zwischenproduktes zufriedenstellend sind, wird der Flüssigkeitkristall eingefüllt, der Hohlraum für den Flüssigkeitkristall versiegelt und die Kontakte werden angeschlossen.

Letztlich werden wieder visuelle Inspektionen im Schritt 136 und Messungen durchgeführt, um zu prüfen, ob das Endprodukt mit seinen wesentlichen Eigenschaften innerhalb der Toleranzgrenzen liegt.

Sollte im Schritt 125 bei der optischen Prüfung ein Fehler erkennbar sein, kann nur nachpoliert bzw. kann das Glas aufbereitet werden, indem die ITO-Beschichtung durch Material abtragende Techniken, etwa polieren, entfernt wird. Entsprechendes ist auch beim Schritt 127 möglich. Auch dort kann noch zum Schritt 123 zurückgekehrt werden, um die eventuell fehlgeschlagene ITO-Beschichtung wieder zu entfernen. Entsprechendes gilt nach dem Schritt 130. Auch hier können die strukturierten Elektroden und Anschlüsse sowie Zuleitungen noch durch ein Polieren der FOTURAN-Lochplatte wieder entfernt werden. Eventuell können außerhalb des aktiven LCD-Matrixbereichs liegende Zuleitungen auch von Hand repariert werden, was durch den Schritt 132 angedeutet wird.

Nach der Fertigstellung im Schritt 139 kann das Endprodukt in eine Belichtungseinrichtung gemäß den Fig. 1 bzw. 2 eingebaut werden. Der Schritt 138 symbolisiert lediglich die Entsorgung eines unzureichenden End- oder Zwischenproduktes.

In bezug auf die beigefügte Anlage A sei nur angemerkt, daß diese das Ansteuerungsverfahren für eine Duplexansteuerung der LCD-Einrichtung gemäß der Erfindung wiedergibt. Es handelt sich hierbei praktisch um ein softwaremäßig (in der Programmiersprache "Maple") wiedergegebenes Ansteuerungsverfahren, das sich aus der Anlage A erklärt. Da Programmiersprachen in englischer Sprache sind, ist dementsprechend die Anlage A auch im Hinblick auf die Kommentare in englischer Sprache abgefaßt.

Mit der LCD-Einrichtung gemäß der Erfindung ist es möglich, Lichtausbeuten von etwa 60 % des einfallenden Lichts zu erzielen. Auch bessere Werte werden erreicht. Ferner tritt eine wesentlich geringere Farbverfälschung auf, als bei herkömmlichen LCD-Einrichtungen, die eine Lichtausbeute von ca. 20 % vorzuweisen haben.

Anlage A

## LCD-Duplex-Verfahren mit binären Treibersignalen

```
[ > with (linalg):
[ > N := 4:  Dimension of signal vectors
[ > fac := Uo*sqrt(1+sqrt(2)/2);
```

$$fac := \frac{1}{2}\,Uo\,\sqrt{4 + 2\sqrt{2}}$$

```
[ > evalf(fac);
```

$$1.306562965\;Uo$$

```
[ > S:= matrix([[1,1,-1,-1],[1,-1,-1,1]]):
[ > R:=
    evalm(sqrt(2)/2*matrix([matadd(row(S,1),row(S,2)),matadd(row(S,1
    ),-row(S,2))]));
```

$$R := \begin{bmatrix} \sqrt{2} & 0 & -\sqrt{2} & 0 \\ 0 & \sqrt{2} & 0 & -\sqrt{2} \end{bmatrix}$$

```
[ > S:= stack(S,-row(S,2)):
[ > S:= stack(S,-row(S,1));
```

$$S := \begin{bmatrix} 1 & 1 & -1 & -1 \\ 1 & -1 & -1 & 1 \\ -1 & 1 & 1 & -1 \\ -1 & -1 & 1 & 1 \end{bmatrix}$$

The first two rows of S are the orthogonal binary functions from which the actual signals are derived
The actual driving signals    s[j] are the rows of S multiplied by fac
The actual common signals r[i] are the rows of R multiplied by fac

```
[ > C1:=
    matrix([matadd(row(S,1),-row(R,1)),matadd(row(S,2),-row(R,1)),ma
    tadd(row(S,3),-row(R,1)),matadd(row(S,4),-row(R,1))]);
```

$$C1 := \begin{bmatrix} 1-\sqrt{2} & 1 & -1+\sqrt{2} & -1 \\ 1-\sqrt{2} & -1 & -1+\sqrt{2} & 1 \\ -1-\sqrt{2} & 1 & 1+\sqrt{2} & -1 \\ -1-\sqrt{2} & -1 & 1+\sqrt{2} & 1 \end{bmatrix}$$

The ith row of C1 is C1[i] = S[i] - R[1]. Thus c1[i] = fac*C1[i] is the voltage accross the LC for the common signal r[1] and the driving signal s[i]

```
[ > C2:=
    matrix([matadd(row(S,1),-row(R,2)),matadd(row(S,2),-row(R,2)),ma
    tadd(row(S,3),-row(R,2)),matadd(row(S,4),-row(R,2))]);
```

$$C2 := \begin{bmatrix} 1 & 1-\sqrt{2} & -1 & -1+\sqrt{2} \\ 1 & -1-\sqrt{2} & -1 & 1+\sqrt{2} \\ -1 & 1-\sqrt{2} & 1 & -1-\sqrt{2} \\ -1 & -1-\sqrt{2} & 1 & 1+\sqrt{2} \end{bmatrix}$$

Page 1

The ith row of C2 is C2[i] = S[i] - R[2]. Thus c2[i] = fac*C2[i] is the voltage accross the LC for the common signal r[2] and the driving signal s[i]

```
> for i from 1 by 1 to 4 do
    print(factor(fac*norm(row(C1,i),frobenius)/sqrt(N))) od;
```

$$U_o$$

$$U_o$$

$$(1+\sqrt{2})\,U_o$$

$$(1+\sqrt{2})\,U_o$$

RMS voltages accross the LC for the common signal r[1];

```
> for i from 1 by 1 to 4 do
    print(factor(fac*norm(row(C2,i),frobenius)/sqrt(N))) od;
```

$$U_o$$

$$(1+\sqrt{2})\,U_o$$

$$U_o$$

$$(1+\sqrt{2})\,U_o$$

RMS voltages accross the LC for the common signal r[2];

```
>
> c1:= (j,x)->C1[j,floor(x)]:
> c2:= (j,x)->C2[j,floor(x)]:

> plot([c1(1,x)+7.5,c1(2,x)+2.5,c1(3,x)-2.5,c1(4,x)-7.5,-7.5,-2.5,
    2.5,7.5],x = 1..5,title = 'C1',thickness = 3,axes = NONE,color =
    balck);
```

**Patentansprüche**

1. LCD-Einrichtung, insbesondere zur Belichtungssteuerung einer Belichtungsvorrichtung (10), etwa eines Fotoprinters, zum Belichten von fotoempfindichem Material, mit:

   a) einer ersten durchsichtigen Platte (102) und einer zweiten durchsichtigen Platte (104), die planparallel beabstandet zueinander angeordnet sind;
   b) einem Flüssigkeitkristallfluid (108), das zwischen den Platten (102, 104) eingeschlossen ist;
   c) mehreren Bildelementen;
   d) Elektroden (74; 82, 86), die auf den Platten (102, 104) vorgesehen und den Bildelementen zugeordnet sind;
   e) Zuleitungen (51), um den Elektroden Steuersignale zuzuführen;
   gekennzeichnet durch die folgenden Merkmale:
   f) die erste Platte (102) weist auf einer Seite den Bildelementen zugeordnete Elektroden auf;
   g) die einer Elektrode zugeordnete Zuleitung (51) ist auf der anderen Seite der ersten Platte (102) vorgesehen; und
   h) die jeweiligen Zuleitungen (51) sind über leitende Bereiche (50) bzw. in der ersten Platte (102) an die Elektroden (74) angeschlossen.

2. LCD-Einrichtung nach Anspruch 1, dadurch gekennzeichnet, daß eine Ebene mit Gegenelektroden (82, 86) getrennt von den Elektroden (74) vorgesehen ist.

3. LCD-Einrichtung nach einem der Ansprüche 1 oder 2, dadurch gekennzeichnet, daß die leitenden Bereiche (50) Öffnungen in der ersten Platte (102) sind, deren Ränder bzw. Wandungen mit einem leitenden Material wenigstens teilweise belegt bzw. beschichtet sind.

4. LCD-Einrichtung nach einem der Ansprüche 1 bis 3, dadurch gekennzeichnet, daß wenigstens eine, bevorzugt beide der Elektroden- bzw. Gegenelektrodenebenen mit einem wenigstens für das sichtbare Licht wenigstens im wesentlichen durchlässigem Material ausgebildet sind.

5. LCD-Einrichtung nach einem der Ansprüche 1 bis 4, dadurch gekennzeichnet, daß wenigstens einige der Zuleitungen bzw. Zuleitungsebenen, die den Elektrodenebenen zugeordnet sind, mit einem wenigstens für das sichtbare Licht wenigstens im wesentlichen durchlässigen Material ausgebildet sind.

6. LCD-Einrichtung nach einem der Ansprüche 4 oder 5, dadurch gekennzeichnet, daß das durchlässige Material auch leitend ist, insbesondere ITO-Material ist.

7. LCD-Einrichtung nach einem der Ansprüche 1 bis 6, dadurch gekennzeichnet, daß die erste durchsichtige Plane einen licht- bzw. strahlungsempfindlichen Zusatz enthält, bevorzugt einen Silber enthaltenden Zusatz, so daß durch eine entsprechende Behandlung die leitenden Bereiche bzw. Durchführungen herstellbar sind, bevorzugt FOTURAN.

8. LCD-Einrichtung nach Anspruch 7, dadurch gekennzeichnet, daß die belichteten bzw. bestrahlten Bereiche materialabtragend bearbeitet werden, bevorzugt nachgeätzt werden, um Öffnungen (50) zu erzeugen.

9. LCD-Einrichtung nach einem der Ansprüche 1, 2 oder 4 bzw. 5, dadurch gekennzeichnet, daß die erste durchsichtige Platte (102) durch Dotierung mit den leitenden Bereichen (50) ausstattbar ist.

10. LCD-Einrichtung nach einem der vorangehenden Ansprüche, dadurch gekennzeichnet, daß die Zuleitungen wenigstens im aktiven Matrixbereich der LCD-Einrichtung (20) so großflächig wie möglich sind.

11. LCD-Einrichtung nach einem der vorangehenden Ansprüche, dadurch gekennzeichnet, daß die Elektroden wenigstens im aktiven Matrixbereich der LCD-Einrichtung (20) so großflächig wie möglich sind.

12. LCD-Einrichtung nach einem der vorangehenden Ansprüche, dadurch gekennzeichnet, daß die Gegenelektrode so großflächig wie möglich und in Abhängigkeit davon deren Zuleitungen so großflächig wie möglich wenigstens im aktiven Matrixbereich der LCD-Einrichtung sind.

13. LCD-Einrichtung nach einem der Ansprüche 1 bis 12, dadurch gekennzeichnet, daß die Öffnungen (50) mit einem weitgehend durchsichtigen Filmmaterial, etwa Kunstharz, Kit oder dergleichen, soweit als möglich, bevorzugt vollständig, gefüllt sind.

**14.** LCD-Einrichtung nach einem der Ansprüche 1 bis 13, dadurch gekennzeichnet, daß auf wenigstens einer der Platten ein UV-Schutz (100) aufgebracht ist.

**15.** LCD-Einrichtung nach einem der vorangehenden Ansprüche, dadurch gekennzeichnet, daß ein Gegenelektrodenbereich jeweils zwei Elektrodenbereichen zweier Bildelemente der LCD-Einrichtung zugeordnet ist.

**16.** LCD-Einrichtung nach einem der Ansprüche 1 bis 15, dadurch gekennzeichnet, daß die Bildelemente mit analogen und/oder binären AC-Signalen beaufschlagbar sind.

**17.** LCD-Einrichtung nach Anspruch 19, dadurch gekennzeichnet, daß jeder der Farbbereiche, für die ein zu belichtendes Bildmaterial eine Empfindlichkeit aufweist, separat berücksichtigbar ist, wobei bevorzugt eine farbselektive Filtereinrichtung einsetzbar ist bzw. daß jeder der Farbbereiche, für die ein zu belichtendes Bildmaterial eine Empfindlichkeit aufweist, separat berücksichtigbar ist.

**18.** Verfahren zur Herstellung einer LCD-Einrichtung (20), insbesondere nach einem der vorhergehenden Ansprüche, bei dem

a) die erste Platte (102) mit einer Öffnungsmaskierung versehen wird, die zur Herstellung der leitenden Bereiche (50) eingesetzt wird;
b) die erste Platte einer materialabtragenden Behandlung unterzogen wird, um die Öffnungen in der ersten Platte (102) zu erzeugen;
c) ein Material, das im sichtbaren Lichtbereich des Lichtes im wesentlichen durchsichtig ist, auf beiden Seiten der ersten Platte aufgebracht wird;
d) das leitende, durchsichtige Material strukturiert wird, um die Zuleitungen und/oder die Elektroden auszubilden;
e) die zweite Platte planparallel zu der ersten Platte beabstandet an dieser befestigt wird;
f) ein Zwischenraum (108) zwischen den Platten mit dem Flüssigkeitkristallfluid gefüllt wird.

**19.** Verfahren nach Anspruch 18, dadurch gekennzeichnet, daß das durchsichtige Material leitend gemacht wird, beispielsweise durch temperaturinitiierte Effekte, Dotierung oder dergleichen.

**20.** Verfahren nach einem der Ansprüche 18 oder 19, dadurch gekennzeichnet, daß Schritt 21b durchgeführt wird, indem eine reaktive Bearbeitung durchgeführt wird, beispielsweise naß- bzw. trockengeätzt wird.

**21.** Verfahren nach einem der Ansprüche 18 bis 20, dadurch gekennzeichnet, daß der Schritt 21c durchgeführt wird, indem eine Aufdampf- oder Sputtertechnologie verwendet wird, wobei bevorzugt nacheinander beidseitig beschichtet wird.

**22.** Verfahren nach Anspruch 21, dadurch gekennzeichnet, daß erste Platte (102) relativ zu der Aufdampf- oder Sputtergutquelle geneigt gedreht wird, etwa in einem Winkel von 35° bis 60°, bevorzugt etwa 45°, um die Öffnungen (50) bzw. deren Wandungen zu beschichten.

**23.** Verfahren nach einem der Ansprüche 21 oder 22, dadurch gekennzeichnet, daß die erste Platte (102) eine Taumelbewegung durchführt, wobei bevorzugt eine mittlere Neigung von etwa 45° zu der Aufdampf- bzw. Sputtermaterialquelle eingestellt wird.

**24.** Verfahren nach einem der Ansprüche 18 bis 23, dadurch gekennzeichnet, daß eine Deckschicht (100) auf die erste Platte (102) aufgebracht wird.

**25.** Verfahren nach Anspruch 24, dadurch gekennzeichnet, daß als Deckschicht ein UV-Schutzglas (100) aufgebracht wird.

**26.** Verfahren nach einem der Ansprüche 18 bis 25, dadurch gekennzeichnet, daß die Öffnungen nach der Beschichtung mit wenigstens im wesentlichen durchsichtigem Material zumindest im wesentlichen aufgefüllt werden.

27. Verfahren nach einem der Ansprüche 18 bis 25, dadurch gekennzeichnet, daß die Öffnungen nach der Beschichtung mit wenigstens im wesentlichen durchsichtigem Material zumindest im wesentlichen aufgefüllt werden, wobei eine Deckschicht bzw. das UV-Schutzglas mit dem durchsichtigen Material an der ersten Platte (102) festgelegt wird.

28. Verfahren nach einem der Ansprüche 18 bis 27, dadurch gekennzeichnet, daß auf der zweiten Platte die Gegenelektroden und Zuleitungen zu dieser ausgebildet werden.

**FIG. 1**

FIG. 2

FIG. 3

FIG. 3A

FIG. 4

FIG. 4A

**FIG. 5**

FIG. 6

FIG. 6A

# FIG. 7

## Kennlinien

"Direkter Mode"

"Inverser Mode"

I / Imax

Spannung (Ueff)

EP 0 981 066 A1

# FIG. 8

A

Com1
Com2

R

B
Com1    Com2

$U_0 * \sqrt{3}$

C
R

D
Com1 - R    Com2 - R

$U_{eff}$    E

$U_0$    $U_0$

$3U_0$    $U_0$

$U_0$    $3U_0$

$3U_0$    $3U_0$

Nt = 6

EP 0 981 066 A1

FIG. 9

Europäisches
Patentamt

**EUROPÄISCHER RECHERCHENBERICHT**

Nummer der Anmeldung

EP 98 11 5693

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN vol. 017, no. 684 (P-1661), 15. Dezember 1993 -& JP 05 232490 A (MATSUSHITA ELECTRIC WORKS LTD), 10. September 1993 | 1-4,6,11 | G02F1/1345 G02F1/1343 G03B27/72 |
| A | * Zusammenfassung; Abbildungen 1-25 * <br><br> -& DATABASE WPI Week 9341 Derwent Publications Ltd., London, GB; AN 93-323123 XP002089720 * Zusammenfassung * | 13, 18-21, 26-28 | |
| X | PATENT ABSTRACTS OF JAPAN vol. 004, no. 058 (P-009), 30. April 1980 -& JP 55 028089 A (SEIKO EPSON CORP), 28. Februar 1980 * Zusammenfassung; Abbildungen 5,6 * | 1,2,11, 15 | |
| X | US 4 050 814 A (MCFADDEN THOMAS A) 27. September 1977 * Spalte 4, Zeile 45 - Spalte 5, Zeile 41 * * Spalte 3, Zeile 35 - Zeile 46; Abbildungen 2,3 * | 1-4,12, 16 | RECHERCHIERTE SACHGEBIETE (Int.Cl.6) G02F G03B |
| A | PATENT ABSTRACTS OF JAPAN vol. 016, no. 430 (P-1417), 9. September 1992 -& JP 04 147222 A (KOMATSU LTD), 20. Mai 1992 * Zusammenfassung * | 1-6 | |

-/--

Der vorliegende Recherchenbericht wurde für alle Patentansprüche erstellt

| Recherchenort | Abschlußdatum der Recherche | Prüfer |
|---|---|---|
| DEN HAAG | 12. Januar 1999 | Stang, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

**Europäisches**
**Patentamt**

# EUROPÄISCHER RECHERCHENBERICHT

**Nummer der Anmeldung**

EP 98 11 5693

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | PATENT ABSTRACTS OF JAPAN vol. 010, no. 019 (P-423), 24. Januar 1986 -& JP 60 173520 A (NIPPON DENKI KK), 6. September 1985 * Zusammenfassung * | 7,18,20 | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 12. Januar 1999 | Stang, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)